# EUROPEAN PATENT SPECIFICATION

(11) **EP 4 540 534 B1**
(45) Date of publication and mention of the grant of the patent: **06.05.2026**
(21) Application number: 23736473.2
(22) Date of filing: 15.06.2023
(51) Int. Cl.: F16C 33/66, F16C 33/78

(54) **BEARING ASSEMBLY LUBRICATED WITH GREASE, IN PARTICULAR FOR WIND TURBINES AND CABLE TRANSPORTATION SYSTEMS, COMPRISING A GREASE COLLECTION AND DISCHARGE SYSTEM**
FETTGESCHMIERTE LAGERANORDNUNG, INSBESONDERE FÜR WINDTURBINEN UND KABELTRANSPORTSYSTEME, MIT EINEM FETTSAMMEL- UND -ABGABESYSTEM
ENSEMBLE PALIER LUBRIFIÉ AVEC DE LA GRAISSE, EN PARTICULIER POUR DES SYSTÈMES DE TRANSPORT DE CÂBLE ET ÉOLIENNES, COMPRENANT UN SYSTÈME DE COLLECTE ET DE DÉCHARGE DE GRAISSE

(30) Priority: 16.06.2022 IT 202200012773
(43) Date of publication of application: 23.04.2025
(73) Proprietor: WINDFIN B.V., 2451 VW Leimuiden (NL)
(72) Inventor: BONOTTO, Nicola, 2451 VW LEIMUIDEN (NL); BABUIN, Alessandro, 2451 VW LEIMUIDEN (NL)
(74) Representative: Studio Torta S.p.A.
(86) International application number: PCT/IB2023/056196
(87) International publication number: WO 2023/242790

(56) References cited:
- CN-A- 112 460 149
- DE-A1- 102013 200 356
- JP-A- 2020 051 448

## Description

### Cross-Reference to Related Applications

This Patent Application claims priority from Italian Patent Application No. 102022000012773 filed on June 16, 2022

### Technical Field

The technical field of this invention concerns heavy mechanics systems, such as, preferably, wind turbines and cable transportation systems, but also earthmoving machines, cranes, lifters, etc., wherein there are rotating elements connected to fixed parts by means of special bearings. In the details of this invention, such bearings are lubricated with grease and, in this context, this invention will deal with the issue of how to optimise the periodic steps for replacing the lubrication grease of these components.

### State of the Art

In the context of heavy mechanics, as in wind turbine and cable transportation systems, it is known to use bearings lubricated with grease to connect moveable parts to fixed parts.

To retain the grease in the coupling portions and to be able to, in any case, replace it when necessary, it is known to provide the above-mentioned bearings with special seals. Referring to the axis of the ring-shaped bearing, the grease is housed in the axial gap between the inner and outer rings and, at the opposite sides of this in the gap, there is a hermetic seal on one side and a lip seal on the other. As known, the lip seal is configured so that the grease leaks out in a controlled way during normal operation of the bearing, as well as during the steps of topping up or changing the grease. Obviously, the used-up grease that has leaked out of the lip seal must be removed periodically to avoid the grease penetrating the other points of the bearing from here.

In large mechanic systems, such as, for example, a cable car system and a wind turbine, these cleaning operations for the used-up leaked grease, as described above, are not very convenient to perform given also the height at which one must operate and, sometimes, it also requires the dismantling of some components. Obviously, said operation involves high costs and long maintenance times.

There is, therefore, the need today to have a new and inventive solution to the problem of removing the used-up, leaked grease as described above in the bearing.

DE102013200356 discloses a bearing assembly grease-lubricated according to the preamble of claim 1.

### Description of the Invention

The purpose of this invention is, thus, to provide a bearing assembly that reduces the drawback of the prior art described in the preceding chapter regarding the problem of removing the used-up grease.

This invention provides, as a starting point, a known configuration of a grease-lubricated bearing, in particular for wind turbines or cable transportation systems, wherein this bearing is annular shaped around an axis A and comprises:
- an outer ring;
- an inner ring, wherein between the inner ring and outer ring an axial gap is provided filled with lubrication grease and extending from a first side to a second side of the bearing assembly;
- at least one rolling body housed in the gap to allow relative rotation of the rings around the axis A;
- a first hermetic seal and a lip seal respectively at the first and second side of the gap to allow grease to leak out the gap only at the second side of the bearing assembly.

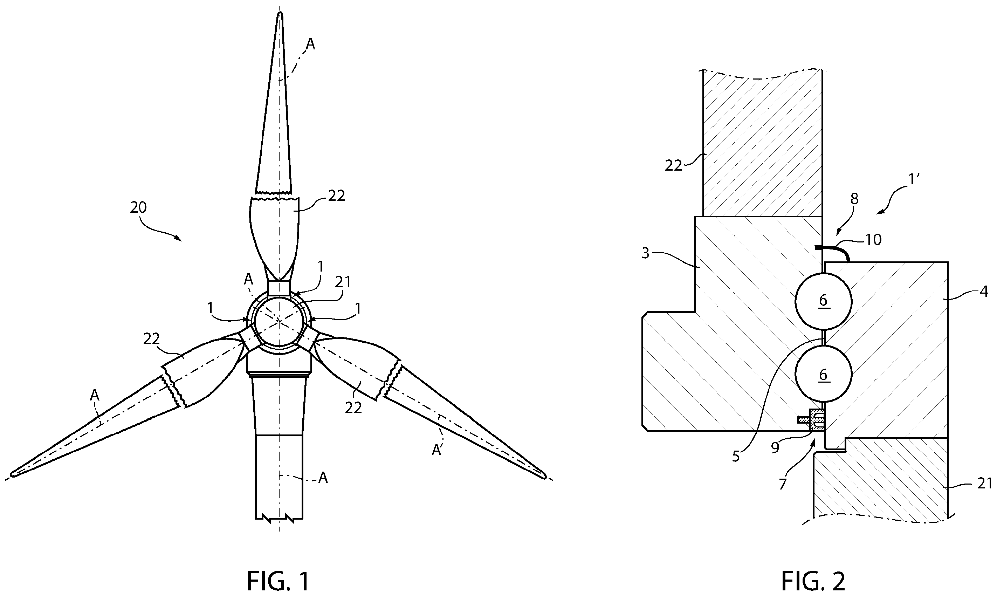

The configuration described up to here corresponds to the current state of the art (that is also represented in Figure 2) and, thus, the person skilled in the art does not require other details to fully understand the implementation thereof.

Starting from this known configuration, this invention proposes, in an inventive way, to provide the bearing assembly with an additional element in the form of a sealing-holding ring (claimed as the third ring 11), which will define, with a specific seal, a closed collection chamber for grease downstream of the lip seal. In addition, this third ring is provided with a series of channels, ducts, openings, and grooves for creating a discharge circuit configured to carry, in a controlled manner, the grease from the collection chamber outside the bearing assembly. In detail, the new elements that this invention thus involves are:
- the above-mentioned third ring connected to the outer ring of the bearing wherein this third ring has a radial extension towards the axis A at the second side of the bearing to create a portion overhanging and facing (spaced) the inner ring and the lip seal;
- a second hermetic seal (extending basically axially) that connects the third ring to the inner ring so as to create a collection chamber for the grease leaked from the gap through the lip seal at the second side; thus, the collection chamber is delimited by a radial face of the inner ring, the second hermetic seal, the radial face of the third ring facing the inner ring, the portion of the axial face of the outer ring that extends axially beyond the inner ring and the lip seal in the mouth of the gap;
- a discharge circuit obtained in the third ring with at least one inlet facing the collection chamber (in fluidic connection) and at least one discharge opening for discharging the grease collected in the collection chamber outside the bearing assembly.

Thus, advantageously, according to this invention, the used-up grease that has leaked out the lip seal in the mouth of the gap cannot penetrate the bearing but finds a discharge route defined by the discharge circuit obtained in the third ring.

The discharge circuit preferably comprises an annular groove (with a circular or square cross-section) obtained in the ring and facing the collection chamber. The discharge circuit comprises, in addition, discharge openings (at least one) obtained in the ring and connected fluidically to the annular groove to discharge the grease outside the bearing assembly. These discharge openings may be simple tangential holes or ends of radial discharge ducts or tangential ones connected to the annular groove.

According to one embodiment, it is possible to provide a device that forces the grease from the groove to the discharge openings, for example a mobile piston device may be provided in the groove to force the grease from the groove to the openings and/or discharge ducts. Still more preferably, the piston device may comprise a piston or plunger with a cross-section basically corresponding to the groove and two cables (preferably metallic) connected on opposite sides of the piston. These cables serve to control the motion of the piston and may have ends that leave the discharge openings due to the manual actuation of the piston and, therefore, of the grease discharge.

If there are radial discharge ducts connected to the groove, in the gap are present fixed deflectors at these radial discharge ducts to direct the grease towards the discharge. The discharge ducts being radial, the grease is forced by the rotation itself of the bearing towards the discharge and the piston described above is not required.

Again, if there are radial discharge ducts connected to the groove, in the gap (also in addition to the deflectors) there may be partitions connected to the fixed ring during the step for removing the used-up grease to divide the gap into sub-chambers wherein each is connected to at least one radial discharge duct.

There are preferably removable plugs at the discharge openings present on the outer face of the third ring.

Alternatively, or in addition to the above-mentioned plugs, in the gap there may preferably be movable plugs for selectively opening and closing the connection between the gap and the discharge ducts or openings.

As mentioned at the start, this invention finds its most advantageous application in heavy mechanical systems.

This invention extends, in a non-limiting way, in detail to a wind turbine comprising a hub and at least one blade extending along an axis A and coupled to the hub in a rotatable manner in relation to the axis A to modify the wing area of the blade exposed to the wind. Advantageously, the blade may be coupled to the hub in a rotatable manner through a bearing assembly as claimed and described in this invention. In particular, in this case, the blade and the hub are coupled on opposite sides of the bearing assembly respectively to the third ring and the inner ring. It should be specified, in any case, that the hub and the blade may be understood, generically, as a first and second body of the wind turbine and, in this sense, the bearing of this invention may be integrated in the turbine in other positions too to connect different components. For example, in a wind turbine, the bearing of this invention may be provided as a "main-bearing" and/or "yaw-bearing", i.e., bearings interposed respectively between the hub and nacelle and between nacelle and tower head (the person skilled in the art knows these elements well).

Another preferred area in which to integrate this invention is that of cable transportation systems. In this sense, this invention also extends to a cable transportation system that comprises a hauling cable, at least one passenger transport unit coupled to the hauling cable, a pulley coupled to the cable to haul the cable rotating around the axis A, a pulley support structure; wherein the pulley is coupled to the support structure in a rotatable manner through a bearing assembly as claimed and described in this invention. In particular, the pulley and the support structure are coupled on opposite sides of the bearing respectively to the third ring and the inner ring.

Of course, other technical areas of heavy mechanics with bodies in relative rotation may also be improved thanks to this invention. For example, a bearing assembly according to this invention may be integrated into earthmoving machines, cranes, lifters, etc.

### List of Drawings

This invention will now be described with reference to the attached drawings that illustrate some non-limiting embodiments thereof, in which:
- Figure 1 is a schematic view of a wind turbine that may be improved thanks to this invention;
- Figure 2 is a cross-section view of a portion of a bearing according to the prior art;
- Figure 3 is a cross-section view of a portion of a first example of a bearing assembly according to this invention;
- Figure 4 is a schematic view of an accessory device of the bearing assembly in Figure 3;
- Figures 5 and 6 are cross-section views of portions of a second example of a bearing assembly according to this invention;
- Figures 7 and 8 are cross-section views of portions of a third example of a bearing assembly according to this invention.

### Description of an Embodiment of the Invention

Figure 1 shows a schematic view of a wind turbine that may be improved thanks to this invention. As indicated above, this wind turbine is an example of a system that may be improved according to this invention. In particular, Figure 1 shows a wind turbine 20 comprising a hub 21 that supports three blades 22 in which each blade 22 extends along its axis A. As known, each blade 22 is coupled to the hub 21 in a rotatable manner in relation to the axis A to enable the modification of the wing area of the blade 22 to be exposed to the wind. To this end, therefore, each blade 22 is coupled to the hub 21 in a rotatable manner through a bearing and this bearing may be a bearing assembly 1 according to this invention. Of course, other bearing assemblies according to this invention may be installed in the wind turbine 20 in other, different positions. As mentioned above, both the application to the sector of wind turbines and the specific example of the support of the blade on the hub are only non-limiting applications of this invention. For example, again in a wind turbine, the bearing assembly of this invention may be provided instead of the common bearings used today as a "main-bearing" and "yaw-bearing", i.e., bearings interposed respectively between the hub and nacelle and between nacelle and tower head (the person skilled in the art knows these elements well).

Figure 2 is a cross-section view of a portion of a bearing according to the prior art that connects the hub 21 to a blade 22 of the wind turbine 20 in Figure 1. As can be seen, this known bearing 1' is annular around the axis A and comprises:
- an outer ring 3,
- an inner ring 4, wherein between the inner ring 4 and outer ring 3 an axial gap 5 is provided filled with lubrication grease and extending from a first side 7 to a second side 8 of the bearing assembly 1;
- two rolling bodies 6 housed in the gap 5 to allow relative rotation of the rings 3, 4 around the axis A;
- a first hermetic seal 9 and a lip seal 10 respectively at the first side 7 and at the second side 8 on opposite sides of the gap 5 to allow grease to leak out the gap 5 only at the second side 8 of the bearing assembly 1'.

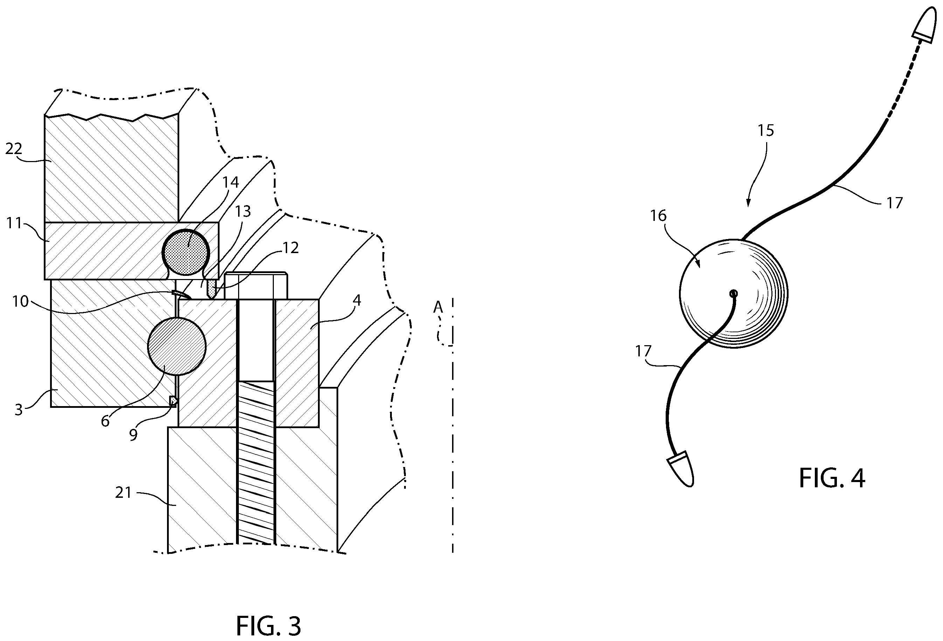

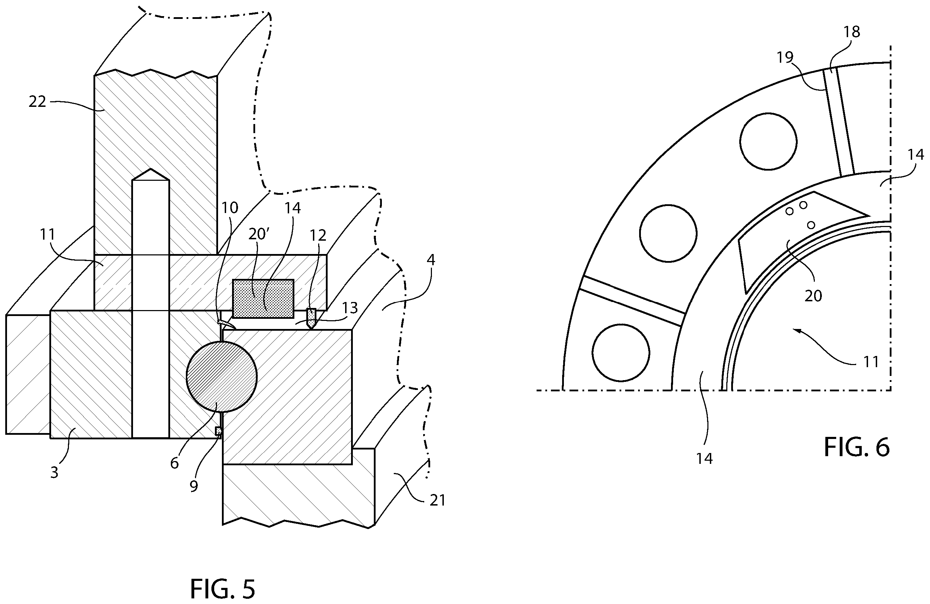

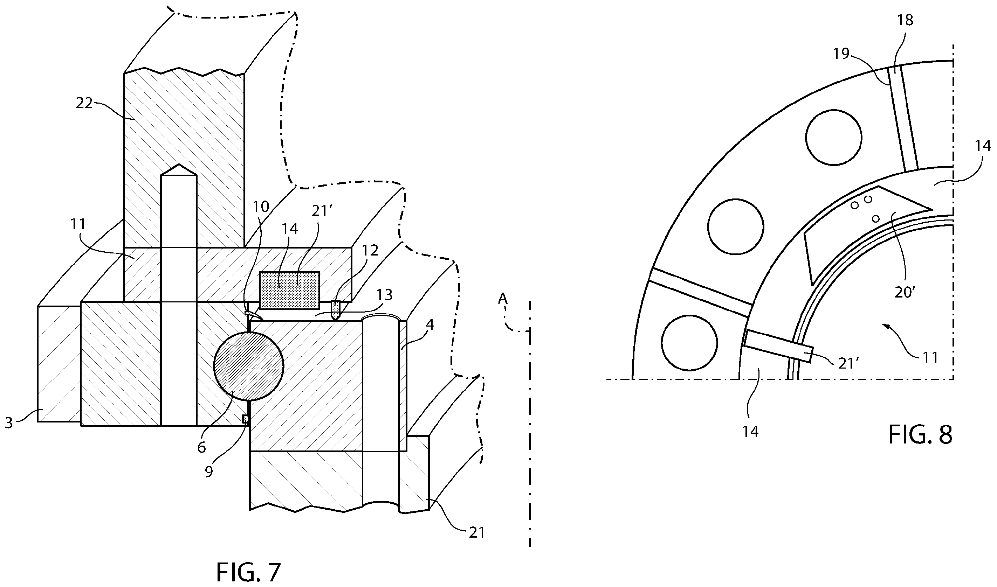

In this example, it is the outer ring 3 that rotates while the inner ring 4 is fixed. In any case, according to this invention it is possible to have different couplings in which it is the inner ring 4 to rotate while the outer ring 3 is fixed.
Starting from this known structure, the Figures 3, 5-6, and 7-8 show, respectively, a first, a second, and a third example of a bearing assembly 1 according to this invention. In the example of Figure 3, the bearing assembly 1 according to this invention comprises all the elements present in the known bearing 1' of Figure 1 to which a third ring 11 was added between the blade 22 and the outer ring 3. As can be seen, this third ring 11 connected to the outer ring 3, for example using screws, extends radially toward the axis A at the second side 8 so that it has a portion facing the inner ring 4 and the lip seal 10. In the inner portion, the third ring supports a second hermetic seal 12 connecting the third ring 11 itself to the upper surface of the inner ring 3 for creating a collection chamber 13 for grease leaking from the gap 5 through the lip seal 10 at the second side 8. In this chamber 13, the grease is collected only temporarily because in the ring 11 a discharge circuit was formed configured to discharge the grease collected in the collection chamber 13 outside the bearing assembly 1. In this example, the discharge circuit comprises an annular groove 14 facing the collection chamber 13 connected fluidically to discharge openings, potentially plugged with special removable plugs, again obtained in the ring 11 facing outside the bearing assembly 1. To force the migration of the grease from the annular groove 14 to the discharge openings, the figure shows a piston device 15, which is mobile in the groove 14, comprising a piston or plunger 16 and two cables 17 connected on opposite sides of the piston 16 and that leave the tangential discharge openings due to the manual actuation of the piston and, therefore, of the grease discharge. The second embodiment shown in Figures 5 and 6 differs from the example above due to the fact that the discharge openings 18 are radial and connected to radial discharge ducts 19 obtained, again, in the third ring 11 in fluidic communication with the groove 14. As can be seen in Figure 6, in this example, there are deflectors 20' provided in the gap 14 at the radial discharge ducts 19 to direct grease to the radial discharge ducts 19. The motion of the grease in this example can be forced by the rotation of the blade 22. In relation to the example above, in the third example of Figures 7 and 8, in the gap 14 there are, additionally, partitions 21' that are integral with the inner ring 4, possibly also mobile, to force the flow towards the discharge ducts 18.

Lastly, it is clear that modifications and variations may be made to the invention described herein without departing from the scope of the present invention, as described in the appended claims.

## Claims

1. A bearing assembly grease-lubricated, in particular for wind turbines (2) and/or cable transportation systems, wherein the bearing assembly (1) is annular shaped around an axis (A) and comprises:
- an outer ring (3);
- an inner ring (4), wherein between the inner ring (4) and outer ring (3) an axial gap (5) is provided filled with lubrication grease and extending from a first side (7) to a second side (8) of the bearing assembly (1);
- at least one rolling body (6) housed in the gap (5) to allow relative rotation of the rings (3, 4) around the axis (A);
**characterized in that** the bearing assembly (1) also comprises:
- a first hermetic seal (9) and a lip seal (10) respectively at the first side (7) and at the second side (8) of the gap (5) to allow grease to leave the gap (5) only at the second side (8) of the bearing assembly (1);
- a third ring (11) connected to the outer ring (3) extending radially toward the axis (A) at the second side (8) so that it has a portion facing the inner ring (4) and the lip seal (10);
- a second hermetic seal (12) connecting the third ring (11) to the inner ring (3) for creating a collection chamber (13) for grease leaking from the gap (5) through the lip seal (10) at the second side (8);
- a discharge circuit obtained in the third ring (11) and facing the collection chamber (13) for discharging the grease collected in the collection chamber (13) outside the bearing assembly (1).

2. The bearing assembly as claimed in claim 1, wherein the discharge circuit comprises an annular groove (14) obtained in the third ring (11), the annular groove (14) being on one side facing the collection chamber (13) and on another side connected to discharge openings obtained in the ring (11) facing the outside of the bearing assembly (1).

3. The bearing assembly as claimed in claim 2, wherein a piston device (15) is provided movable in the groove (14) to force grease from the groove (14) of the collection chamber (13) to the discharge openings.

4. The bearing assembly as claimed in claim 3, wherein the discharge openings are tangential to the groove (14).

5. The bearing assembly as claimed in claim 4, wherein the piston device (15) comprises a piston (16) and two cables (17) connected by opposite parts of the piston (16) and extending outside the tangential discharge openings for manual actuation of grease discharge.

6. The bearing assembly as claimed in claim 2, wherein the discharge openings (18) are radial and connected to radial discharge ducts (19) obtained in the third ring (11) and connected, in turn, to the groove (14).

7. The bearing assembly as claimed in claim 6, in which deflectors (20') are provided in the gap (14) at the radial discharge ducts (19) to deflect grease to the radial discharge ducts (19).

8. The bearing assembly as claimed in claim 6, in which partitions (21') are provided in the gap (14) to divide the gap (14) into sub-chambers in which each chamber is connected to at least a radial discharge duct (18).

9. The bearing assembly as claimed in any of claims 6 to 8, where removable plugs are provided at the radial discharge openings (18).

10. The bearing assembly as claimed in any one of claims 6 to 8, wherein movable plugs are provided in the gap (14) to selectively open and close the connection between the gap (14) and the radial discharge ducts (19).

11. A wind turbine (20) comprising a first body and at least one second body extending along an axis (A) and coupled to the first body in a rotatable manner with respect to the axis (A); wherein the second body is coupled to the first body in a rotatable manner by a bearing assembly (1) as claimed in any one of the preceding claims wherein the second body and the first body are coupled by opposite portions of the bearing assembly (1) to the third ring (11) and the inner ring (3), respectively.

12. The wind turbine (20) as claimed in claim 11, in which, respectively, the first body is a hub (21) and the second body is a blade (22) rotating around the axis (A) to change the wing area of the blade (22) to be exposed to the wind.

13. A cable transport system comprising a hauling cable, at least one passenger transport unit coupled to the hauling cable, a pulley coupled to the cable to haul the cable rotatably around the A-axis, a pulley support structure; wherein the pulley is rotatably coupled to the support structure via a bearing assembly (1) as claimed in any one of the preceding claims 1 to 10; wherein the pulley and the support structure are coupled by opposite parts of the bearing (1) to the third ring (11) and the inner ring (3), respectively.

## Patentansprüche

1. Lageranordnung, die fettgeschmiert ist, insbesondere für Windkraftanlagen (2) und/oder Seiltransportsysteme, wobei die Lageranordnung (1) ringförmig um eine Achse (A) herum ist und umfasst:
- einen Außenring (3);
- einen Innenring (4), wobei zwischen dem Innenring (4) und dem Außenring (3) ein axialer Spalt (5) bereitgestellt ist, der mit Schmierfett gefüllt ist und sich von einer ersten Seite (7) zu einer zweiten Seite (8) der Lageranordnung (1) erstreckt;
- zumindest einen Wälzkörper (6), der in dem Spalt (5) untergebracht ist, um eine relative Drehung der Ringe (3, 4) um die Achse (A) zu ermöglichen;
**dadurch gekennzeichnet, dass** die Lageranordnung (1) zudem umfasst:
- eine erste hermetische Dichtung (9) und eine Lippendichtung (10) jeweils an der ersten Seite (7) und an der zweiten Seite (8) des Spalts (5), um zu ermöglichen, dass Fett den Spalt (5) nur an der zweiten Seite (8) der Lageranordnung (1) verlässt;
- einen dritten Ring (11), der mit dem Außenring (3) verbunden ist und sich radial zu der Achse (A) an der zweiten Seite (8) erstreckt, sodass er einen Abschnitt aufweist, der dem Innenring (4) und der Lippendichtung (10) zugewandt ist;
- eine zweite hermetische Dichtung (12), die den dritten Ring (11) mit dem Innenring (3) verbindet, um eine Auffangkammer (13) für Fett zu bilden, das aus dem Spalt (5) durch die Lippendichtung (10) an der zweiten Seite (8) austritt;
- einen Auslasskreislauf, der in dem Ring (11) ausgebildet und der Auffangkammer (13) zugewandt ist, um das in der Auffangkammer (13) aufgefangene Fett aus der Lageranordnung (1) auszulassen.

2. Lageranordnung nach Anspruch 1, wobei der Auslasskreislauf eine in dem Ring (11) ausgebildete ringförmige Nut (14) umfasst, wobei die ringförmige Nut (14) auf bzw. mit einer Seite der Auffangkammer (13) zugewandt ist und auf bzw. mit der anderen Seite mit in dem Ring (11) ausgebildeten Auslassöffnungen verbunden ist, die zu der Außenseite der Lageranordnung (1) gewandt sind.

3. Lageranordnung nach Anspruch 2, wobei eine Kolbenvorrichtung (15) beweglich in der Nut (14) bereitgestellt ist, um Fett aus der Nut (14) der Auffangkammer (13) zu den Auslassöffnungen zu drängen.

4. Lageranordnung nach Anspruch 3, wobei die Auslassöffnungen tangential zu der Nut (14) sind.

5. Lageranordnung nach Anspruch 4, wobei die Kolbenvorrichtung (15) einen Kolben (16) und zwei Seile (17) umfasst, die durch gegenüberliegende bzw. entgegengesetzte Teile des Kolbens (16) verbunden sind und sich zu der Außenseite bzw. außerhalb der tangentialen Auslassöffnungen zur manuellen Betätigung eines Fettauslasses erstrecken.

6. Lageranordnung nach Anspruch 2, wobei die Auslassöffnungen (18) radial sind und mit radialen Auslasskanälen (19) verbunden sind, die in dem dritten Ring (11) ausgebildet und wiederum mit der Nut (14) verbunden sind.

7. Lageranordnung nach Anspruch 6, bei der Deflektoren (20') in dem Spalt (14) an den radialen Auslasskanälen (19) bereitgestellt sind, um Fett zu den radialen Auslasskanälen (19) abzulenken.

8. Lageranordnung nach Anspruch 6, bei der Abtrennungen bzw. Trennwände (21') in dem Spalt (14) bereitgestellt sind, um den Spalt (14) in Teilkammern zu unterteilen, bei denen jede Kammer mit zumindest einem radialen Auslasskanal (18) verbunden ist.

9. Lageranordnung nach einem der Ansprüche 6 bis 8, wo entfernbare Stopfen an den radialen Auslassöffnungen (18) bereitgestellt sind.

10. Lageranordnung nach einem der Ansprüche 6 bis 8, wobei bewegliche Stopfen in dem Spalt (14) bereitgestellt sind, um die Verbindung zwischen dem Spalt (14) und den radialen Auslasskanälen (19) selektiv zu öffnen und zu schließen.

11. Windkraftanlage (20), umfassend einen ersten Körper und zumindest einen zweiten Körper, der sich entlang einer Achse (A) erstreckt und mit dem ersten Körper auf drehbare Weise in Bezug auf die Achse (A) gekoppelt ist; wobei der zweite Körper mit dem ersten Körper über eine Lageranordnung (1) nach einem der vorhergehenden Ansprüche auf drehbare Weise gekoppelt ist, wobei der zweite Körper und der erste Körper durch gegenüberliegende bzw. entgegengesetzte Abschnitte der Lageranordnung (1) mit dem dritten Ring (11) bzw. dem Innenring (3) gekoppelt sind.

12. Windkraftanlage (20) nach Anspruch 11, bei welcher der erste Körper eine Nabe (21) ist und der zweite Körper ein Rotorblatt (22) ist, das sich um die Achse (A) dreht, um die dem Wind ausgesetzte Flügelfläche des Rotorblatts (22) zu ändern.

13. Seiltransportsystem, umfassend ein Zugseil, zumindest eine mit dem Zugseil gekoppelte Fahrgasttransporteinheit, eine mit dem Seil gekoppelte Umlenkrolle zum Befördern des Seils drehbar um die A-Achse, eine Umlenkrollen-Trägerkonstruktion; wobei die Umlenkrolle über eine Lageranordnung (1) nach einem der vorhergehenden Ansprüche 1 bis 10 drehbar mit der Trägerkonstruktion gekoppelt ist; wobei die Umlenkrolle und die Trägerkonstruktion durch gegenüberliegende bzw. entgegengesetzte Teile des Lagers (1) mit dem dritten Ring (11) bzw. dem Innenring (3) gekoppelt sind.

## Revendications

1. Ensemble palier lubrifié à la graisse, en particulier pour éoliennes (2) et/ou systèmes de transport de câbles, dans lequel l'ensemble palier (1) est de forme annulaire autour d'un axe (A) et comprend :
- une bague extérieure (3) ;
- une bague intérieure (4), dans lequel un espace (5) axial est prévu entre la bague intérieure (4) et la bague extérieure (3) rempli de graisse de lubrification et s'étendant d'un premier côté (7) à un second côté (8) de l'ensemble palier (1) ;
- au moins un corps roulant (6) logé dans l'espace (5) pour permettre une rotation relative des bagues (3, 4) autour de l'axe (A) ;
**caractérisé en ce que** l'ensemble palier (1) comprend également :
- un premier joint hermétique (9) et un joint à lèvre (10) respectivement au niveau du premier côté (7) et au niveau du second côté (8) de l'espace (5) pour permettre à la graisse de quitter l'espace (5) uniquement au niveau du second côté (8) de l'ensemble palier (1) ;
- une troisième bague (11) reliée à la bague extérieure (3) s'étendant radialement vers l'axe (A) au niveau du second côté (8) de sorte qu'elle présente une portion orientée vers la bague intérieure (4) et le joint à lèvre (10) ;
- un second joint hermétique (12) reliant la troisième bague (11) à la bague intérieure (3) pour créer une chambre de collecte (13) pour la graisse s'échappant de l'espace (5) à travers le joint à lèvre (10) au niveau du second côté (8) ;
- un circuit d'évacuation obtenu dans la troisième bague (11) et orienté vers la chambre de collecte (13) pour évacuer la graisse collectée dans la chambre de collecte (13) à l'extérieur de l'ensemble palier (1).

2. Ensemble palier selon la revendication 1, dans lequel le circuit d'évacuation comprend une rainure annulaire (14) obtenue dans la troisième bague (11), la rainure annulaire (14) étant sur un côté orientée vers la chambre de collecte (13) et sur un autre côté reliée à des ouvertures d'évacuation obtenues dans la bague (11) orientée vers l'extérieur de l'ensemble palier (1).

3. Ensemble palier selon la revendication 2, dans lequel un dispositif de piston (15) est prévu mobile dans la rainure (14) pour pousser la graisse à partir de la rainure (14) de la chambre de collecte (13) vers les ouvertures d'évacuation.

4. Ensemble palier selon la revendication 3, dans lequel les ouvertures d'évacuation sont tangentes à la rainure (14).

5. Ensemble palier selon la revendication 4, dans lequel le dispositif de piston (15) comprend un piston (16) et deux câbles (17) reliés par des parties opposées du piston (16) et s'étendant à l'extérieur des ouvertures d'évacuation tangentielles pour l'actionnement manuel de l'évacuation de graisse.

6. Ensemble palier selon la revendication 2, dans lequel les ouvertures d'évacuation (18) sont radiales et reliées à des conduits d'évacuation radiaux (19) obtenus dans la troisième bague (11) et reliés, à leur tour, à la rainure (14).

7. Ensemble palier selon la revendication 6, dans lequel des déflecteurs (20') sont prévus dans l'espace (14) au niveau des conduits d'évacuation radiaux (19) pour dévier la graisse vers les conduits d'évacuation radiaux (19).

8. Ensemble palier selon la revendication 6, dans lequel des cloisons (21') sont prévues dans l'espace (14) pour diviser l'espace (14) en sous-chambres dans lesquelles chaque chambre est reliée à au moins un conduit d'évacuation radial (18).

9. Ensemble palier selon l'une quelconque des revendications 6 à 8, dans lequel des bouchons amovibles sont prévus au niveau des ouvertures d'évacuation radiales (18).

10. Ensemble palier selon l'une quelconque des revendications 6 à 8, dans lequel des bouchons mobiles sont prévus dans l'espace (14) pour ouvrir et fermer sélectivement la liaison entre l'espace (14) et les conduits d'évacuation radiaux (19).

11. Éolienne (20) comprenant un premier corps et au moins un second corps s'étendant le long d'un axe (A) et couplé au premier corps de manière rotative par rapport à l'axe (A) ; dans laquelle le second corps est couplé au premier corps de manière rotative par un ensemble palier (1) selon l'une quelconque des revendications précédentes, dans laquelle le second corps et le premier corps sont couplés par des portions opposées de l'ensemble palier (1) à la troisième bague (11) et à la bague intérieure (3), respectivement.

12. Éolienne (20) selon la revendication 11, dans laquelle, respectivement, le premier corps est un moyeu (21) et le second corps est une pale (22) tournant autour de l'axe (A) pour modifier la zone d'aile de la pale (22) à exposer au vent.

13. Système de transport de câble comprenant un câble de halage, au moins une unité de transport de passagers couplée au câble de halage, une poulie couplée au câble pour haler le câble en rotation autour de l'axe A, une structure de support de poulie ; dans lequel la poulie est couplée en rotation à la structure de support via un ensemble palier (1) selon l'une quelconque des revendications 1 à 10 précédentes ; dans lequel la poulie et la structure de support sont couplées par des parties opposées du palier (1) à la troisième bague (11) et à la bague intérieure (3), respectivement.
